# EUROPÄISCHE PATENTSCHRIFT

(11) **EP 2 469 544 B1**
(45) Veröffentlichungstag und Bekanntmachung des Hinweises auf die Patenterteilung: **18.06.2014**
(21) Anmeldenummer: 11193356.0
(22) Anmeldetag: 13.12.2011
(51) Int. Cl.: H01F 7/126, H01F 7/127, H01F 7/128, H01F 7/16

(54) **Elektromagnet mit Tubus**
Electromagnet with tube
Electroaimant avec tube

(30) Priorität: 20.12.2010 DE 102010055209
(43) Veröffentlichungstag der Anmeldung: 27.06.2012
(73) Patentinhaber: SVM Schultz Verwaltungs-GmbH & Co. KG, 87700 Memmingen (DE)
(72) Erfinder: Hasel, Claus-Peter, 87700 Memmingen (DE)
(74) Vertreter: Schulz, Manfred

(56) Entgegenhaltungen:
- EP-A2- 1 313 110
- DE-A1-102005 056 435
- DE-A1-102006 028 437
- DE-A1-102007 032 130
- DE-A1-102007 036 924
- DE-A1-102008 030 453
- DE-A1-102009 011 576

## Beschreibung

Die Erfindung betrifft einen Elektromagneten bestehend aus einem Gehäuse, wobei das Gehäuse einen Spulenkörper aufnimmt und der Spulenkörper Wicklungen von elektrisch leitendem Draht trägt und der Spulenkörper einen, einen Anker aufnehmenden Ankerraum umgibt und die Gehäusewand des Gehäuses eine Ausnehmung im Bereich des Ankerraumes besitzt.

Eingangs beschriebene Elektromagneten sind in der Technik wohlbekannt. Sie dienen zum Beispiel als Betätigungs- oder Stellglieder für den Antrieb von Ventilen oder ähnlichem. Auch der Einsatzbereich der gattungsgemässen Elektromagneten ist sehr groß. Sie werden zum Beispiel auch in Fahrzeugen oder Flugzeugen eingesetzt. Bei diesen Anwendungen, ist auf Kosten beziehungsweise Gewicht der eingesetzten Bauteil zu achten.

Im Stand der Technik sind Konstruktionen der vorgenannten Elektromagneten bekannt, die bei ausgesprochen hohen Arbeitsdrücken (zum Beispiel 200 bar und mehr), die im Ankerraum anliegen können, eingesetzt werden. Natürlich sind die gattungsgemässen Elektromagneten ausreichend druckfest auszubilden, um zuverlässig arbeiten zu können und leckage frei zu sein. So offenbart die Druckschrift DE 10 2008 030 453 einen Elektromagneten, bei welchem eine polrohrartige Hülse im Gehäuse nach Art eines separaten Tubus eingesetzt ist. Dieser Tubus erstreckt sich teilweise in den Ankerraum bildenden Ventilteil hinein.

Für eine kostengünstige Produktion des Gehäuses, das Einzelteile des Elektromagneten (Spule, Anschlusstechnik, Stecker und so weiter) aufnimmt, sind moderne Herstellverfahren im Einsatz, so zum Beispiel wird das Gehäuse als Pulverspritzgußteil ausgebildet. Der Vorteil der Verwendung dieses Herstellungsverfahrens für die Stellung des Gehäuses, welches auch als MIM (metal injection molding) oder Metallpulverspritzguß bezeichnet wird, liegt darin, dass mit diesem Herstellungsverfahren verhältnismässig komplizierte Geometrien in dem Gehäuse in einem Arbeitsschritt, gegebenenfalls auch ohne zusätzliche zerspanende Bearbeitung ausführen zu müssen, produziert werden können. So bietet es sich an, den Ankerraum durch eine Gehäusewand, welche einstückig mit dem übrigen Gehäuse ausgebildet ist, zu umgeben.

Nun ist zu beachten, dass im Ankerraum hohe Drücke herrschen, die natürlich auch auf die Ankerraumwände wirken. Hinter der dem Ankerraum abschließenden Gehäusewand ist der Spulenkörper angeordnet, der eine Vielzahl von Wicklungen von stromdurchfließbarem Draht trägt. Für eine optimale Effizienz der gattungsgemässen Elekromagneten wird dabei darauf geachtet, dass die Wandstärken aller Gehäuseteile, auch die Wandstärke der den Ankerraum umgebenden Gehäusewand möglichst minimiert wird. Im Fuss- beziehungsweise Kopfbereich des Ankerraumes schliesst natürlich die den Ankerraum umgebende Gehäusewand an die übrige Gehäusewand an. Die einstückige Ausbildung in diesem Bereich ist für eine hohe Leckagesicherheit günstig. Allerdings sind in diesem Übergangsbereich entsprechende Verstärkungen, an der den Ankerraum umgebenden Gehäusewand notwendig, da hier die Scherkräfte beziehungsweise der Kerbeffekt gerade bei den sehr hohen Drücken und den daraus resultierenden Druckkräften erheblich ist.

Es ist daher bekannt in diesem Übergangsbereich auf der dem Ankerraum abgewandten Seite eine Verstärkung vorzusehen, die zum Beispiel durch eine Verrundung oder eine Hohlkehle zwischen den Elektromagneten begrenzenden Gehäusewand und der den Ankerraum umgebenden Gehäusewand ist.

Diese Verstärkung liegt daher in dem Bereich, in welchem auch der Spulenkörper angeordnet ist.

Der Spulenkörper seinerseits trägt die Wicklungen des elektrisch leitenden Drahtes, die Spule selbst wird automatisiert gewickelt. Die Spule wird daher optimiert als idealer Zylinder gefertigt. Die Anordnung einer Verstärkung (Verrundung oder Hohlkehle) kostet im Vergleich mit verstärkungsfreien Varianten des Elektromagnets nun Bauraum in achsialer Richtung der Spule im Bereich, in dem die Spule eingebaut wird.

Um nun die gleiche mechanische und/oder magnetische Wirkung des hochdrucktauglichen Elektromagneten zu erreichen ist insgesamt der Elektromagnet etwas größer auszuführen. Dies verursacht Kosten und zusätzliches Gewicht, was in speziellen Anwendungsfällen unerwünscht ist.

Die vorliegende Erfindung hat es sich zur Aufgabe gemacht den Stand der Technik derart zu verbessern, dass zumindest einer der vorgenannten Nachteile überwunden wird.

Zur Lösung dieser Aufgabe schlägt die Erfindung einen Elektromagneten gemäß dem Anspruch 1 vor.

Der erfindungsgemässe Vorteil liegt darin, dass bewußt ein separates Bauteil in den Elektromagneten eingebaut wird, welches den Ankerraum definiert und selbst ausreichend druckfest ausgebildet ist. Der Tubus ist als Rohrstück, gegebenenfalls auch durch spanabhebende Bearbeitung entsprechend bearbeitet und in sich ausreichend drucksteif und auch für den Anwendungsbereich optimiert ausgebildet. Der Spulenkörper wird auf den Tubus aufgesteckt, wobei der Tubus auf seiner dem Spulenkörper zugewandten Außenseite zum Beispiel eine zylinderartige, glatte Oberfäche, zumindest bis zu der Innenseite der den Elektromagneten begrenzenden Gehäusewand aufweist. Der Spulenraum ist verrundungsfrei derart, dass der Spulenkörper bis auf den Grund des im Querschnitt nutartigen, den Ankerraum vollständig umgebenden Spulenraumbodens eingelegt werden kann und so den Spulenraum optimal ausnutzt. Dabei wird der Spulenraum bevorzugt als Nut mit parallel verlaufenden Nutwänden gebildet, wobei eine Nutwand die Außenseite des Tubus, die andere Nutwand an der Gehäuseinnenwand des Gehäuses ist. Der Spulenraumboden schließt bevorzugt rechtwinklig an die Nutwände an.

Der Vorschlag erlaubt es, den Tubus aus hochfesten Materialien zu bilden, um so einen druckfesten, insbesondere hochdruckfesten Ankerraum zu schaffen, der auch für Drücke bis 100 bar, bevorzugt ist 200 bar, insbesondere bevorzugt ist bis zu 450 bar druckdicht beziehungsweise druckfest ausgebildet ist. Geschickterweise ist der Tubus zumindest abschnittsweise als Tubusrohr ausgebildet, wobei der Tubus zum Beispiel von einem beidseitig offenen Rohrprofil abgelängt, oder aus einem Vollmaterial herausgearbeitet worden ist. Letzteres ermöglicht es, in dem Tubus eine Sackausnehmung vorzusehen, bei welcher der Tubus nur auf einer Seite eine Öffnung besitzt. Die Anordnung einer Sackausnehmung in den Tubus hat insbesondere den Vorteil, dass somit keine zusätzlichen Anstrengungen für die Dichtigkeit zu erbringen sind.

Durch die Öffnung ist der Ankerraum natürlich auch zugänglich und der im Ankerraum beweglich gelagerte Anker wirkt hierdurch auf ein extern angeordnetes Bauteil, zum Beispiel ein Ventil oder ähnliches. Der Tubus ist dabei in eine Ausnehmung des Gehäuses eingesetzt, die Ausnehmung umschliesst natürlich dabei auch die Öffnung des Tubus. Um den Anschluss von außerhalb des Elektromagneten angeordneter Bauteile, welche von dem Anker betätigt werden, zu erleichtern, besitzt der Tubus im Bereich der Öffnung einen Außenrand dessen Innendurchmesser größer ist als der Durchmesser des Tubusrohrstückes beziehungsweise der Sackausnehmung. Der Tubus ist im Anschlussbereich entsprechend aufgeweitet.

Bevorzugt ist der Tubus als rotationssymetrisches Bauteil ausgebildet, wodurch sich seine spanabhebende Außenbearbeitung erheblich erleichtert. Des Weiteren wird bei dieser Ausgestaltung auch die Montage des Tubus erleichtert, da es nicht auf eine spezielle Lage des Tubus relativ zum Elektromagneten ankommt. Natürlich ist der Tubus zum Beispiel mit einer Positionieranordnung ausstattbar, um dadurch zum Beispiel seine Lage im Elektromagneten beziehungsweise Gehäuse rotativ festzulegen und/oder die Lage der Spule, die auf den Tubus aufgesteckt ist, ebenfalls rotativ zu definieren. Unter einer rotativen Festlegung versteht man in diesem Zusammenhang, dass die Winkellage des entsprechenden Elementes bezüglich der Spulen achse als Drehachse festlegt ist.

In einer Ausgestaltung der Erfindung ist vorgesehen, dass die Ausnehmung in der Gehäusewand eine Abstufung aufweist, welche mit dem Außenrand des Tubus zusammenwirkt. Die Abstufung ist an der Ausnehmung so angeordnet, dass auf der Gehäuseaußenseite ein Ring mit größerem Durchmesser angeordnet ist, an dem sich an der Innenseite (der Spule zugewandt) ein Ring mit kleinem Durchmesser anschließt. Es ergibt sich somit in achsialer Richtung, (bezogen auf die Spule) ein Anschlag für den Tubus, wenn dieser in das Gehäuse eingeschoben wird.

In dem Tubus können, wie bereits ausgeführt, verhältnismässig hohe Drücke herrschen. Diese liegen auch am Außenrand an. Diese Übergangsbereiche des Außenrandes zum übrigen Tubusrohrstück können mechanische Schwachstellen sein, weswegen es hier günstig ist, eine Materialverstärkung an der Tubuswand im Bereich des Außenrandes beziehungsweise im Übergangsbereich des Tubusrohrstückes zum Außenrand anzuordnen. Eine entsprechende Materialverstärkung wird zum Beispiel mit einer Hohlkehle oder Verrundung erreicht die allerdings hier in der Gehäuseebene (im Bereich der Abstufung) ist und nicht den verfügbaren Spulenraum für die Einbau der Spule reduziert. Der erfindungsgemässe Vorschlag verlegt die gegebenenfalls konstruktiv notwendige Materialverstärkung, die durch die Verrundung der Hohlkehle realisiert wird, nach außen, wo sie bauvolumenneutral realisierbar ist.

In einer Ausgestaltung der Erfindung ist das Gehäuse als Pulverspritzgußteil, insbesondere als Metallpulverspritzgußteil ausgebildet. Diese Herstellungsform hat den Vorteil, dass in einem Herstellungsschritt auch verhältnismässig komplexe Gehäusegestaltungen realisierbar sind. Durch das Metallpulverspritzgußverfahren sind auch elektrisch leitende Gehäuse realisierbar.

Um den Elektromagneten an einem Einsatzpunkt, zum Beispiel an einer Hydraulik- oder Pneumatikleitung anordnen zu können, besitzt das Gehäuse auf der der Ausnehmung zugewandten Seite einen Befestigungsflansch. Üblicherweise ist dabei der Befestigungsflansch einstückig mit dem Gehäuse verbunden, zum Beispiel ebenfalls in dem Pulverspritzgußverfahren beziehungsweise Metallpulverspritzgußverfahren an das Gehäuse mitangeordnet worden.

In der Zeichnung ist die Erfindung insbesondere in einem Ausführungsbeispiel schematisch dargestellt. Es zeigen:
- Fig. 1: einen erfindungsgemässen Elektromagneten in der Seitenansicht
- Fig. 2: einen Elektromagneten nach dem Stand der Technik in Seitenansicht

In den Figuren sind gleiche oder einander entsprechende Elemente jeweils mit den gleichen Bezugszeichen bezeichnet und werden daher, sofern nicht zweckmäßig, nicht erneut beschrieben.

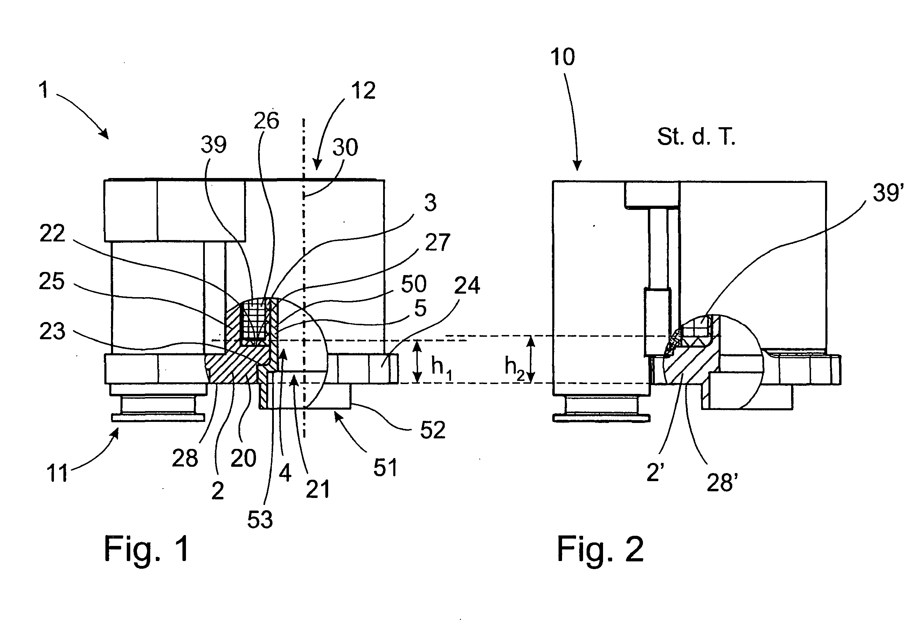

In der Zeichnung wird die Erfindung insbesondere durch ein Vergleich des erfindungsgemässen Elektromagneten 1 nach Fig.1 mit einem Vorschlag 10 nach dem Stand der Technik nach Fig. 2 erläutert.

Gattungsgemässe Elektromagneten besitzen in einem ersten Teilgehäuse einen Steckkontakt 11 und in einem zweiten Teilgehäuse 12 die aufgrund des erzeugten Magnetfeldes mechanisch wirksamen Bauteile, zum Beispiel den Anker oder die Ankerstange.

Üblicherweise ist dabei der Elektromagnet gebildet von einem Ankerraum 4, in welchem ein nicht gezeigter Anker längs der Spulenachse 30 beweglich ist. Der Ankerraum 4 wird zumindest teilweise umgeben von einem Spulenkörper 3. Der Spulenkörper 3 trägt eine Vielzahl von Drahtwicklungen 39 mit elektrisch leitendem Draht. Die Anschlüsse der Spule sind mit den Steckkontakten im Stecker 11 elektrisch leitend verbunden. Bei Beaufschlagung der Drahtwicklung 39 mit elektrischem Strom wird im Ankerraum 4 ein Magnetfeld erzeugt, das auf den Anker, oftmals gegen die Kraft einer Rückstellfeder, wirkt.

Für eine hochdruckdichte Ausgestaltung des Ankerraumes 4 ist erfindungsgemäss vorgesehen, dass der Ankerraum 4 von einem von dem Gehäuse 2 des Elektromagneten 1 getrennten Tubus 5 begrenzt ist.

Der Tubus 5 ist dabei gebildet von einem Tubusrohrstück 50 und einem an der Außenseite anschließenden Außenrand 52. Es ist gut zu erkennen, dass der Innendurchmesser des Außenrandes 52 größer ist als der Innendurchmesser des Tubusrohrstückes 50. Es bildet sich am Außenrand 52 ein entsprechender Absatz 53.

Die verschiedenen Bauteile des Elektromagneten werden in das Gehäuse 2 eingebaut. Dabei besitzt das Gehäuse 2 innen- und außenliegende Gehäusewände. Eine außenliegende Gehäusewand 20 weist eine entsprechende Ausnehmung 21 auf, durch welche der Tubus 5 heraussteht. Der Tubus 5 seinerseits besitzt eine Öffnung 51, durch welche das durch den Elektromagneten betätigte Element, zum Beispiel der Anker auf eine außerhalb angeordnete Baugruppe, zum Beispiel ein Ventil, zu wirken vermag. Bezüglich der Spulenachse 30 radial außerhalb des Spulenkörpers 3 schließt sich an diesen eine Gehäuseinnenwand 25 an. Es bildet sich somit ein hülsenartiger Spulenraum 26; der radial innen durch den Tubus 5 und radial außen durch die Gehäuseinnenwand 25 begrenzt ist. Die Gehäuseinnenwand 25 und die Außenseite des Tubus 5 wird durch den Spulenraumboden 27, der ein Stück der Innenseite 22 des Gehäuses 2 ist, verbunden. Dabei wird der Spulenkörper 3 mit dem aufgewickelten Draht auf den Tubus 5 aufgesteckt und von diesem auch gehalten beziehungsweise geführt. Der Flansch 24, der am Gehäuse 2 auf der Seite der Ausnehmung 21 angeordnet ist, dient zum Befestigen des Elektromagneten. Die Ausnehmung 21 wird in dem hier gezeigten Ausführungsbeispiel nicht von einer zylinderartigen Wand begrenzt, sondern weist im inneren Bereich, dem Spulenkörper 3 zugewandt, eine nach innen gerichtete Abstufung 23 auf, die als Anschlag für den Tubus 5, insbesondere den Absatz 53, der am Außenrand 52 anliegt, dient.

Erfindungsgemäss wird vorgeschlagen, dass der Spulenraumboden 27 verrundungsfrei, also im Wesentlichen rechtwinklig an den Tubus 5, der als separates, eigenständiges Bauteil ausgeführt ist, anschließt. Hieraus resultiert, dass der zur Verfügung stehende Spulenraum 26 effizienter ausgefüllt und nutzbar ist.

Mit h₁ ist der Abstand der Drahtwicklung 39' von der Außenfläche 28 des Gehäuses 2 gekennzeichnet.

In Fig. 2 ist mit h₂ die analoge Distanz zwischen dem unteren Rand der Drahtwicklung 39' zur Außenfläche 28' des Gehäuses 2' bei einem Vorschlag nach dem Stand der Technik gekennzeichnet. In der zeichnerischen Darstellung fallen die Außenflächen 28 beziehungsweise 28' zu einer gemeinsamen Basisfläche zusammen. Es ist gut zu erkennen, dass der Abstand h₁ nach der Erfindung kleiner ist als nach dem Vorschlag gemäß dem Stand der Technik bei welchem der Abstand h₂ etwas größer ist.

Dieser Höhenunterschied führt zu einer entsprechend effizienteren Nutzung des zur Verfügung stehenden Spulenraumes und vermeidet den ansonsten anfallenden Aufwand.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Elektromagnet, bestehend aus einem Gehäuse (2), wobei das Gehäuse (2), in einem, eine Gehäuseinnenwand (25) aufweisenden hülsenartigen Spulenraum (26) einen Spulenkörper (3) aufnimmt und der Spulenkörper (3) Wicklungen von elektrisch leitendem Draht trägt und der Spulenkörper (3) einen, einen Anker aufnehmenden, Ankerraum (4) umgibt, die Gehäusewand (20) des Gehäuses (2) eine Ausnehmung (21) im Bereich des Ankerraumes (4) aufweist und ein Spulenraumboden (27) ein Stück der Innenseite (22) des Gehäuses (2) ist, wobei zwischen Spulenkörper (3) und Ankerraum (4) ein vom Gehäuse (2) separater Tubus (5) angeordnet ist wobei der Spulenraum radial außen durch die Gehäuseinnenwand und radial innen durch den Tubus begrenzt ist, und der Tubus (5) an dem dem Spulenkörper (3) zugewandten Spulenraumboden (27) der Innenseite (22) der Gehäusewand (20) verrundungsfrei abschließt, wobei die Gehäuse innenwand (25) über den Spulenraumboden (27) mit der außen seite (50) des Tubus (5) verbunden ist, und die Ausnehmung (21) in der Gehäusewand (20) eine Abstufung (23) aufweist, welche mit dem Aussenrand (52) des Tubus (5) als axialer Anschlag für den Tubus (5) zusammenwirkt, und dass der Spulenkörper (3) auf den Tubus (5) aufgesteckt ist.

2. Elektromagnet nach Anspruch 1, **dadurch gekennzeichnet, dass** der Ankerraum (4) druckfest, insbesondere druckfest für Drücke bis 100 bar, bevorzugt bis 200 bar, insbesondere bevorzugt bis 450 bar ausgebildet ist.

3. Elektromagnet nach Anspruch 1 oder 2, **dadurch gekennzeichnet, dass** der Tubus (5), zumindest abschnittsweise als Tubusrohrstück (50) ausgebildet ist.

4. Elektromagnet nach einem der vorhergehenden Ansprüche, **dadurch gekennzeichnet, dass** der Tubus (5), zumindest einseitig eine Öffnung (51) besitzt.

5. Elektromagnet nach einem der vorhergehenden Ansprüche, **dadurch gekennzeichnet, dass** der Tubus (5) eine Sackausnehmung aufweist.

6. Elektromagnet nach Anspruch 4 oder 5, dadurch gekennzeichnt, dass der Tubus (5) im Bereich der Öffnung (51) einen Außenrand aufweist, dessen Innendurchmesser größer ist als der Innendurchmesser des Tubusrohrstückes (50) beziehungsweise der Sackausnehmung.

7. Elektromagnet nach einem der vorhergehenden Ansprüche, **dadurch gekennzeichnet, dass** der Tubus (5) als rotationssymmetrisches Bauteil ausgebildet ist.

8. Elektromagnet nach einem der vorhergehenden Ansprüche, **gekennzeichnet durch** eine Materialverstärkung der Tubuswand im Bereich des Außenrandes (52) beziehungsweise im Übergang des Tubusrohrstückes (50) zum Außenrand (52).

9. Elektromagnet nach einem der vorhergehenden Ansprüche, **dadurch gekennzeichnet, dass** das Gehäuse (2) als Pulverspritzgussteil, insbesondere als Metallpulverspritzgussteil ausgebildet ist.

10. Elektromagnet nach einem der vorhergehenden Ansprüche, **dadurch gekennzeichnet, dass** das Gehäuse (2) auf der der Ausnehmung (21) zugewandten Seite einen Befestigungsflansch (24) aufweist.

## Claims

1. Electromagnet consisting of a casing (2) wherein the casing (2) houses a coil body (3) within a bush-like coil space (26) with an inner casing wall (25) and the coil body (3) supports windings of an electrically conducting wire and the coil body (3) surrounds an armature housing (4) receiving an armature and the casing wall (20) of the casing has a recess (21) in the area of the armature housing (4) and a floor (27) of the coil housing is part of the inside wall (22) of the casing (2) wherein a tube (5), separated from the casing (2), is arranged between the coil body (3) and the armature housing (4) and wherein the armature housing (4) is limited at the outside in radial direction by the inner casing wall and also limited at the inside in radial direction by the tube, and the tube (5) connects free of rounding to the floor (27) of the coil housing facing the coil body (3) being part of the inside wall (22) of the casing wall (22), wherein the inner casing wall (25) is connected via the floor (2) of the coil housing with the outer side (50) of the tube (5) and the recess (21) within the casing wall (20) has a shoulder (23) interacting with the exterior edge (52) of the tube (5) as an axial stopper for the tube (5) and the coil body (3) is slid on the tube (5).

2. Electromagnet according to claim 1, **characterized in that** the armature housing (4) is pressure resistant, in particular pressure resistant against pressures of up to 100 bar, preferably up to 200 bar and in particular preferably up to 450 bar.

3. Electromagnet according to claim 1 or 2, **characterized in that** the tube (5) is at least partially confirmed as a tube spout (50).

4. Electromagnet according to one of the preceding claims, **characterized in that** the tube (5) has at least at one end an opening (51).

5. Electromagnet according to one of the preceding claims, **characterized in that** the tube (5) has a pocket recess.

6. Electromagnet according to claim 4 or 5, **characterized in that** the tube (5) has in the area of the opening (51) an outer edge whose inner diameter is lager then the inner diameter of the tube spout (50) or the pocket recess.

7. Electromagnet according to one of the preceding claims, **characterized in that** the tube (5) is configured as a rotational symmetric component.

8. Electromagnet according to one of the preceding claims, **characterized by** a material reinforcement of the tube wall in the area of the outer edge or in the transitional area between the tube spout (50) and the outer edge (52).

9. Electromagnet according to one of the preceding claims, **characterized in that** the casing (2) is configured as a powder injection molded part and in particular as a metal powder injection molded part.

10. Electromagnet according to one of the preceding claims, **characterized in that** the casing (2) has on the side facing the recess (21) an attachment flange (24).

## Revendications

1. Electroaimant, consistant en un châssis (2) recevant une bobine (3) dans une chambre de bobine (26) en forme de prise femelle délimitée par une paroi intérieure de châssis (25), ladite bobine (3) comportant des enroulements de fil électriquement conducteur entourant une chambre de noyau (4) destinée à recevoir un noyau et la paroi (20) du châssis (2) comportant un évidement (21) au niveau de la chambre de noyau (4) et un fond de l'espace de bobine (27) créé par une partie de la paroi intérieure (22) du châssis (2) de façon à ce qu'un tube (5) séparé du châssis (2) est situé entre la bobine (3) et la chambre de noyau (4), et en ce que la chambre d'enroulement est limitée radialement à l'extérieur par la paroi intérieure du châssis et limitée radialement à l'intérieur par le tube, et à ce que l'extrémité du tube (5) se raccorde sans courbure au fond (27) de la chambre de bobine située en face de la bobine (3) et faisant partie de la face intérieure (22) de la paroi de châssis (20), et en ce que la paroi intérieure de châssis (25) est connectée via le fond (27) de la chambre de bobine à la face extérieure (50) du tube (5) et en ce que l'évidement (21) dans la paroi de châssis (20) comporte un bord (23) interagissant avec le bord extérieur (52) du tube (5) comme butée axiale pour le tube (5), et en ce que la bobine (3) est fichée sur le tube (5).

2. Electroaimant selon la revendication 1, **caractérisé en ce que** la chambre de noyau (4) est configurée de façon à résister à la pression et en particulier aux pressions jusqu'à 100 bar, de préférence jusqu'à 200 bar et en particulier et de préférence jusqu'à 450 bar.

3. Electroaimant selon la revendication 1 ou 2, **caractérisé en ce que** le tube (5) est au moins partiellement configuré comme une portion de tube (50).

4. Electroaimant selon une des revendications précédentes, **caractérisé en ce que** le tube (5) comporte au moins d'un côté une ouverture (51).

5. Electroaimant selon une des revendications précédentes, **caractérisé en ce que** le tube (5) comporte un évidement borgne.

6. Electroaimant selon la revendication 4 ou 5, **caractérisé en ce que** le tube (5) comporte au niveau de l'ouverture (51) un bord extérieur dont le diamètre intérieur est supérieur au diamètre intérieur de la portion de tube (50) ou de l'évidement borgne.

7. Electroaimant selon une des revendications précédentes, **caractérisé en ce que** le tube (5) est configuré comme un élément à symétrie de révolution.

8. Electroaimant selon une des revendications précédentes, **caractérisé par** un renforcement matériel de la paroi du tube au niveau du bord extérieur (52) ou au niveau du passage de la portion de tube (50) vers le bord extérieur (52).

9. Electroaimant selon une des revendications précédentes, **caractérisé en ce que** le châssis (2) est produit par moulage à injection de poudres et en particulier par moulage à injection de poudres métalliques.

10. Electroaimant selon une des revendications précédentes, **caractérisé en ce que** le châssis (2) comporte à son côté faisant face à l'évidement (21) une bride de fixation (24).
